# EUROPEAN PATENT APPLICATION

(11) **EP 1 876 381 A1**
(43) Date of publication of application: **09.01.2008**
(21) Application number: 07012678.4
(22) Date of filing: 28.06.2007
(51) Int. Cl.: F16L 37/12

(54) **Quick coupling for threaded fittings**

(30) Priority: 05.07.2006 IT MI20061301
(71) Applicant: Special Couplings S.r.l., 23900 Lecco (IT)
(72) Inventor: Pozzi, Marco, 23900 Lecco (IT)
(74) Representative: Mayer, Hans Benno

(57) **Abstract**

A quick coupling (3) for threaded fittings comprises a fitting element (4) for feeding a pressurized hydraulic or pneumatic fluid passing through a tubular chamber (5) extending through the overall length of the quick coupling (3), wherein at the end facing a threaded further fitting (1) provided for receiving the quick coupling (3) an annular body (11) including annular segment elements (11a,11b,11c,11d) is arranged, the single elements (11a,11b,11c,11d) forming the annular body (11) being resiliently coupled by a resilient ring element (12) and wherein on the outer surface, respectively on the inner surface thereof, the annular segment elements (11a,11b,11c,11d) comprise a thread (13) or a contour suitable to provide a geometrical connection with the further fitting (1).

## Description

### BACKGROUND OF THE INVENTION

The present invention relates to a quick coupling for threaded fittings.

Quick couplings with threaded fittings are used, for example, at the end of an assembling line, where functional tests of the finished product are performed, by using a pressurized fluid.

The above mentioned operations for testing and controlling apparatus and devices at the end of an assembling line are at present performed by hydraulic or pneumatic systems.

Accordingly, it is necessary to connect a threaded end-piece, included in a quick coupling connected to a testing apparatus, with a fitting included in the device to be tested.

To that end, said quick coupling was assembled, in prior methods for performing the testing operations, by assembling keys or tools designed for screwing on the threaded end-piece of the coupling, thereby assuring a required hydraulic or pneumatic sealing in feeding the fluid for performing the functional tests of the product.

Thus, the requirement of using clamping keys or wrenches or specifically designed assembling tools required, in prior methods, a comparatively long time negatively affecting the testing operations, mostly in the case of simple apparatus the testing operation of which, by using a hydraulic or pneumatic fluid, would have required a less time.

### SUMMARY OF THE INVENTION

Accordingly, the main object of the present invention is to overcome the above mentioned drawbacks of the prior art, by providing a quick coupling, to be connected to a threaded end-piece or including a like connection contour, thereby allowing the coupling operations, respectively the uncoupling operations, to be manually performed without using specifically designed wrenches or tools, to allow the quick coupling to be also used for high pressures and flow rates, while preventing leakages from occurring during the coupling/uncoupling operating steps.

Another object of the present invention is to provide such a quick coupling allowing a leakage free flow from the quick coupling to the connecting fitting.

The above mentioned objects are achieved by a quick coupling for threaded end-pieces, comprising a fluid feeding fitting for feeding a pressurized hydraulic or pneumatic fluid passing through a tubular chamber extending for the overall length of the quick coupling, wherein said fitting comprises, at the end portion thereof provided for receiving said quick coupling, an annular body including annular segment like elements, wherein the individual elements forming said annular body are resiliently connected by a resilient ring element, and wherein on their outer circumference, respectively their inner circumference, said individual annular segment like elements comprise a thread or a like coupling contoured portion.

Further advantages of the invention will become more apparent hereinafter from the following disclosure, the dependent claims and the accompanying drawings.

### BRIEF DESCRIPTION OF THE DRAWINGS

The subject matter of the present invention will be disclosed in a more detailed manner hereinafter with reference to an embodiment thereof, given only by way of an example, and being shown in the accompanying drawings, where:
Figure 1 is a cross-sectional view showing a tubular fitting with an inner thread to be connected to the quick coupling according to the present invention;
Figure 2 shows the tubular fitting with the quick coupling engaging therein;
Figure 3 shows a nipple having an outer thread and a quick coupling before the connection thereof;
Figure 4 shows the threaded nipple with the quick coupling engaged therein;
Figure 5 is a detail view showing a detail of the front end portion of the quick coupling to be connected;
Figure 6 is a top plan view showing the body elements forming the threaded coupling element; and
Figure 7 is a cross sectional view taken along the line VII-VII of figure 6 showing the coupling element.

### DESCRIPTION OF THE PREFERRED EMBODIMENT

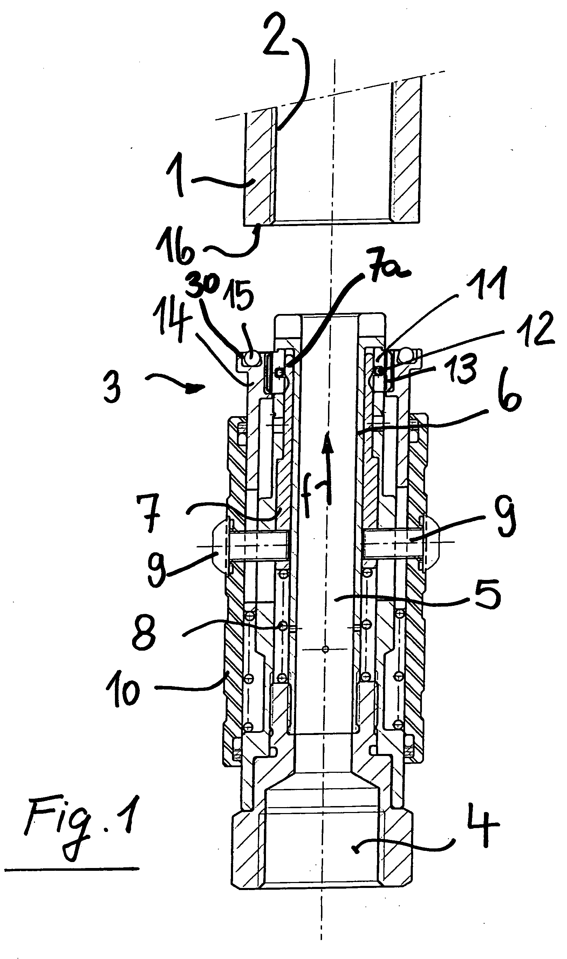

Figure 1 shows a tubular fitting 1 having an inner threaded portion 2.

The fitting 1 is provided for connection to a quick coupling which is generally indicated by the reference number 3.

To said quick coupling 3 is supplied, through a feeding fitting 4, a pressurized hydraulic or pneumatic fluid passing, in the direction shown by the arrow (f) through a tubular chamber 5 provided inside a central pipe 6 extending for the overall length of the quick coupling 3.

As shown, the tubular chamber is not hindered by constructional inner elements, thereby allowing a free end unhindered flow (f) to pass therethrough.

The tubular body 6 is encompassed by a tubular body 7 which is urged by a pressing spring 8.

By radially extending stems 9, said tubular body 7 is operatively coupled to an outer actuating ring nut 10.

The free end portion 7a of the tubular body 7 receives an annular body 11, comprising individual segment-like elements, which, against the counter-biassing of an outer, respectively inner resilient ring element 12, can be driven in a radial direction.

As shown in figure 1, the annular body 11 has an outer thread 13 which can be connected during the connection of the quick coupling 3 with the tubular body 1, by engaging the thread 13 in the threaded portion 2.

Figure 1 shows that the channel 5 of the tubular body 6 passes through the latter without being hindered and interrupted, thereby preventing any substantial flowrate loss from occurring in the pressurized fluid.

The thread 13 of the bodies forming the interexchangeable coupling ring element 11 may be freely selected, thereby allowing to choose an annular element 11 including, for example, a convention M 30 thread, or by replacing the ring element with another ring 11, the latter may have an outer 3/4' gas thread; in this connection it should be apparent that it is also possible to use other types of threads, as well as other types of coupling contoured portions.

Advantageously, at the free end portion of the tubular body 14 is formed a circumferential groove 30 in which is engaged an O-Ring 15, which, as the tubular fitting 1 and quick coupling 3 are assembled, will bear on the front surface 16 of the tubular fitting 1, thereby providing a perfect tightly coupling relationship.

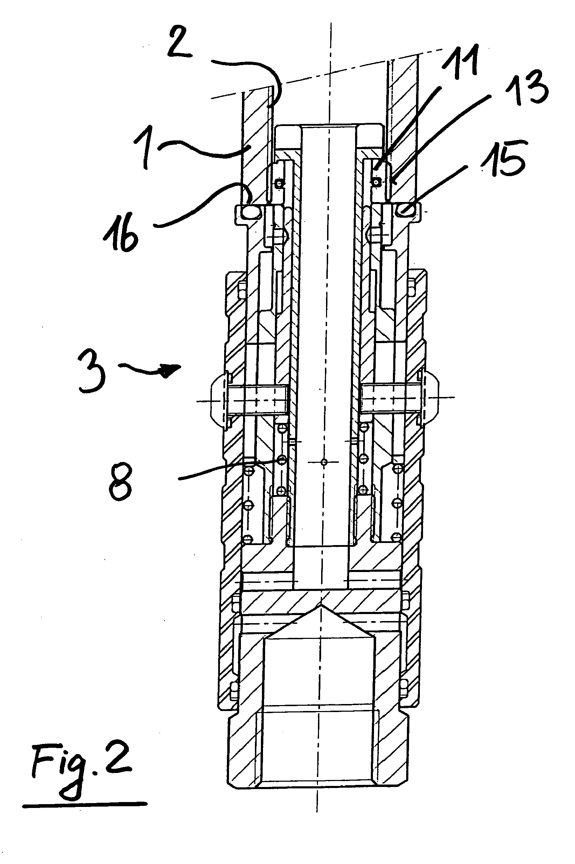

Figure 2 shows the tubular fitting 1 coupled to the front portion of the quick coupling 3.

As shown, the annular gasket or seal 15 perfectly bear on the free surface 16 of the tubular fitting 1, the thread 13 of the annular body 11 being threaded with the threaded portion 2 of the tubular fitting 1.

The spring 8 presses the tubular body 7 frontward in the direction (f).

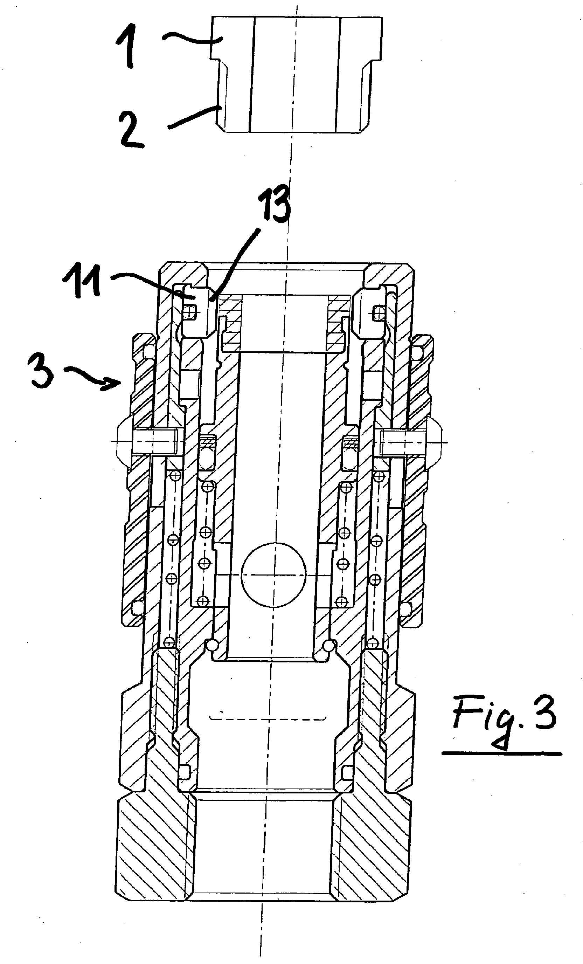

Whilst figures 1 and 2 show a fitting 1 having an inner thread 2, figure 3 shows a tubular fitting 1 having an outer thread 2.

Accordingly, the annular body 11 arranged inside the quick coupling 3 comprises in such a case, for its assembling, an inner thread 13 to be coupled to the outer thread or threaded portion 2 of the tubular fitting 1.

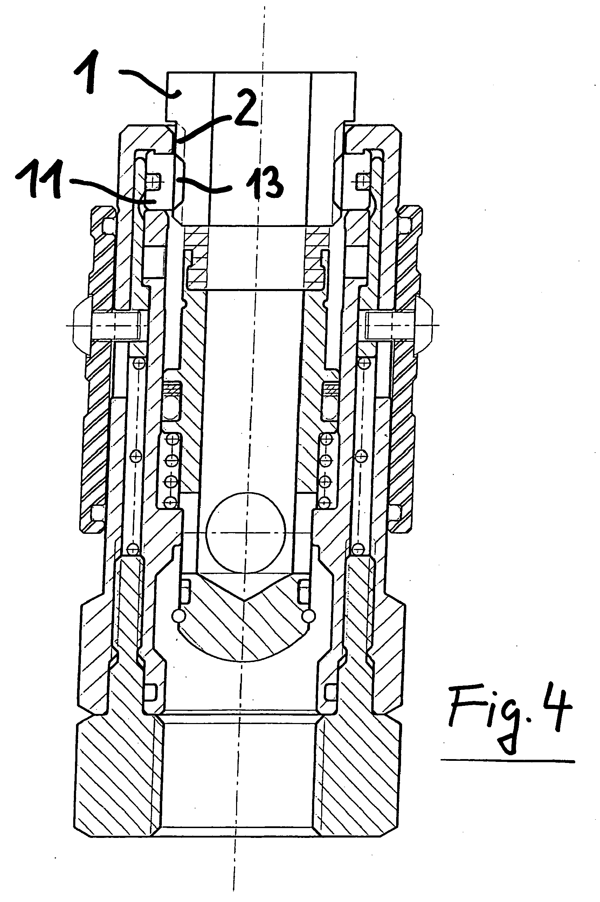

Figure 4 shows that, by coupling the inner thread 13 of the annular body 11, it is possible to provide a connection with the outer thread 2 of the fitting 1.

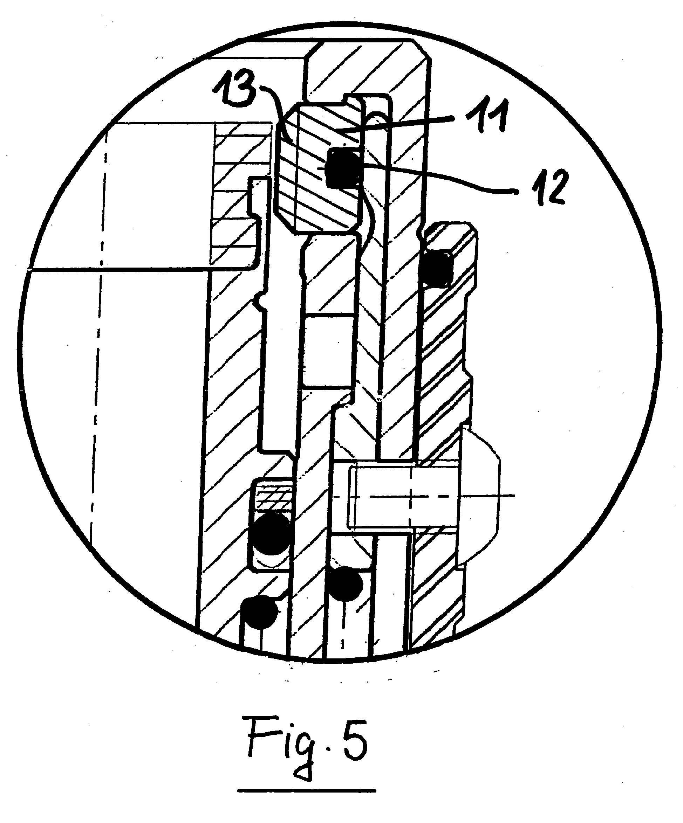

Figure 5 shows, on an enlarged scale, the annular body 11 having its inner thread 13. Said annular body 11 is provided with an outer resilient ring element 12, arranged in an outer circumferential slot.

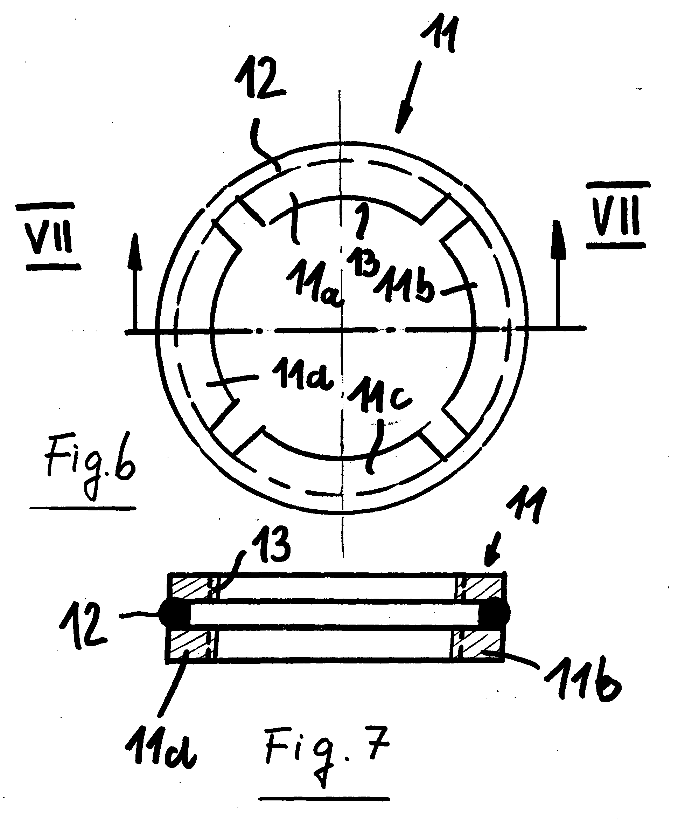

The annular body 11 shown in figure 5 is further shown, by a top plan view, in figure 6.

Said annular body 11 is herein split into individual annular segment like elements 11a, 11b, 11c and 11d. Said elements 11a, 11b, 11c and 11d have a respective inner thread 13. For holding said elements 11a, 11b, 11c, 11d of the annular body 11 resiliently coupled, said annular body 11 has an outer circumferential slot in which the O-Ring resilient element 12 is engaged.

Figure 7 shows, by a cross-sectional view taken along the line VII-VII of figure 6, the annular body 11 and also clearly shows the circumferential resilient ring element 12, the individual segments 11b and 11d and the inner thread 13.

## Claims

1. A quick coupling for threaded end-pieces, comprising a feeding fitting for feeding therethrough a pressurized hydraulic or pneumatic fluid, passing through a tubular chamber extending from an overall length of said quick coupling, **characterized in that** an annular body (11) formed by a plurality of annular segment like elements (11a, 11b, 11c, 11d) is provided at an end portion facing said fitting (1) to receive said quick coupling (3), said individual elements (11a, 11 b, 11c, 11d) forming said annular body (11) being resiliently coupled by a resilient ring (12), and that on their outer, respectively inner, circumference, said individual annular segment-like elements (11a, 11b, 11c, 11d) comprise a thread (13) or like coupling contour.

2. A quick coupling, according to claim 1, **characterized in that** the tubular chamber (5) formed in the central pipe (6) is free of hindering constructional elements.

3. A quick coupling, according to claim 1, **characterized in that** said outer thread (13) of said annular body (11) is coupled, as the quick coupling (3) is assembled, to a threaded portion (2) of said tubular body.

4. A quick coupling, according to claim 1, **characterized in that** said inner thread (13) of said annular body (11), is coupled, as said quick coupling (3) is assembled, to said thread of said tubular body.

5. A quick coupling, according to claim 1, **characterized in that** said segment like elements (11a, 11b, 11c, 11d) forming said annular body (11) are interexchangeable and that the used annular elements (11a, 11b, 11c, 11d) have any desired type of threads or like contour.

6. A quick coupling, according to claim 1, **characterized in that** said tubular body (14) has a free end portion including a circumferential groove (30) therein a sealing gasket (15) is engaged.
